# EUROPÄISCHE PATENTSCHRIFT

(11) **EP 1 634 022 B1**
(45) Veröffentlichungstag und Bekanntmachung des Hinweises auf die Patenterteilung: **07.03.2007**
(21) Anmeldenummer: 04736735.4
(22) Anmeldetag: 14.06.2004
(51) Int. Cl.: F25B 30/06, F24J 3/08, F25B 39/04

(54) **VORRICHTUNG ZUM ERWÄRMEN EINES IM KREISLAUF EINER WÄRME PUMPE GEFÜHRTEN KÄLTEMITTELS**
DEVICE FOR HEATING A COOLANT CONVEYED INSIDE THE CIRCUIT OF A HEAT PUMP
DISPOSITIF POUR RECHAUFFER UN FLUIDE REFRIGERANT CIRCULANT DANS UNE POMPE A CHALEUR

(30) Priorität: 13.06.2003 AT 9232003
(43) Veröffentlichungstag der Anmeldung: 15.03.2006
(73) Patentinhaber: Mittermayr, Karl, 4122 Arnreit (AT); Mittermayr, Klemens, 4122 Arnreit (AT); Mittermayr, Dominik, 4122 Arnreit (AT)
(72) Erfinder: Mittermayr, Karl, 4122 Arnreit (AT); Mittermayr, Klemens, 4122 Arnreit (AT); Mittermayr, Dominik, 4122 Arnreit (AT)
(74) Vertreter: Wildhack, Helmut
(86) Internationale Anmeldenummer: PCT/AT2004/000206
(87) Internationale Veröffentlichungsnummer: WO 2004/111559

(56) Entgegenhaltungen:
- BE-A- 889 155
- DE-A- 3 318 722
- DE-A- 19 727 493
- DE-U- 20 120 401
- DE-U- 29 824 676

## Beschreibung

Die Erfindung betrifft eine Vorrichtung zum Erwärmen eines im Kreislauf einer Wärmepumpe geführten Kältemittels mit einem in ein Erdreich einsetzbaren und einen Verdampfer für einen Wärmeträger bildenden Sondenrohr und mit einem an das obere Ende des Sondenrohrs angeschlossenen Kondensator, aus einem Innenmantel und einem Außenmantel, wobei der Wärmeträger des Sondenrohrs den Innenmantel und das Kältemittel den Ringraum zwischen dem Innen- und dem Außenmantel durchströmt.

Um das bei Wärmepumpen in einem Kreislauf geführte Kältemittel erwärmen zu können, ist es bekannt (DE 201 20 401 U1), im Kreislauf der Wärmepumpe eine Vorrichtung vorzusehen, die mit Erdwärme das Kältemittel beaufschlagt. Diese Vorrichtung entzieht hiezu über ein Sondenrohr dem Erdreich Wärme und gibt diese Wärme über einen an das Sondenrohr angeschlossenen Kondensator an das Kältemittel ab. Damit nun der Kondensator eine hohe Wärmeübertragung auf das Kältemittel gewährleistet, sind nach dem Stand der Technik derartige Kondensatoren vergleichsweise lang ausgebildet und bestehen für eine geringe Baugröße aus einem spiralförmig gewickelten Innen- und Außenrohr. Zwar kann damit der Wärmeübergang vom Wärmeträger auf das Kältemittel verbessert werden, jedoch hat sich überraschender Weise gezeigt, dass mit einer zunehmenden Länge des Kondensators eine geringere Erwärmung des Kältemittels auftritt. Derartige Vorrichtungen sind daher in ihrer maximalen Wärmeübertragung beschränkt, sodass für eine geforderte hohe Erwärmung des Kältemittels mehrere Vorrichtungen in den Kältemittelkreislauf eingebracht werden müssen, was insbesondere aufgrund des Vorsehens von weiteren Sondenrohren im Erdreich kostenintensiv ist.

Die Erfindung hat sich daher die Aufgabe gestellt, eine Vorrichtung zum Erwärmen eines im Kreislauf einer Wärmepumpe geführten Kältemittels der eingangs geschilderten Art so zu verbessern, dass die Erwärmung des Kältemittels nicht im Wesentlichen von der Länge des Kondensators geprägt ist. Außerdem soll eine geringe Baugröße des Kondensators ermöglicht sowie einfache Konstruktionsverhältnisse für eine kostengünstige Herstellung der Vorrichtung geschaffen werden.

Die Erfindung löst die gestellte Aufgabe dadurch, dass der vorzugsweise eine gerade Achse aufweisende Innenmantel des Kondensators zumindest abschnittsweise durch Kammern unterteilt ist, die parallele Strömungswege für den Wärmeträger bilden.

Ist der Innenmantel des Kondensators zumindest abschnittweise durch Kammern unterteilt, die parallele Strömungswege für den Wärmeträger bilden, so weist das Innenrohr weitere Kondensationsflächen zur Abgabe an Wärme an das Innenrohr auf. Wesentlich ist jedoch, dass mit den parallelen Strömungswegen der Wärmeträger nicht in seiner Strömung behindert wird, sodass mit einer höheren Zirkulationsmenge des Wärmeträgers im Sondenrohr auch mehr Wärme dem Erdreich entzogen werden kann. Diese Vorrichtung erreicht daher gegenüber dem Stand der Technik mit einer geringeren Baulänge des Kondensators den gleichen Wirkungsgrad, oder kann mit der selben Länge des Kondensators das Kältemittel der Wärmepumpe höher erwärmen. Womit auch auf vorteilhafte Weise bei einer geforderten hohen Erwärmung des Kältemittels auf zusätzliche Vorrichtungen im Kältemittelkreislauf verzichtet werden kann, was einen großen Kostenvorteil mit sich bringt. Hinzu kommt, dass die mit dem Innenrohr thermisch verbundenen Kammern eine besonders gute Wärmeleitfähigkeit zum vom Kältemittel gekühlten Innenrohr aufweisen, sodass dem Wärmeträger mehr Wärmeenergie entzogen werden kann. Die Vorrichtung zeichnet sich daher nicht nur durch einen hohen Wirkungsgrad aus, sondern es ist auch aufgrund der verringerten Länge des Kondensators möglich, den Innenmantel des Kondensators mit einer geraden Achse zu versehen, was weiter den Strömungswiderstand für den Wärmeträger vermindert. Auch entstehen dadurch einfache Verhältnisse für ein Verlegen der Vorrichtung sowie ist auch der Aufwand zur Herstellung der Vorrichtung und damit die Kosten hiefür geringer.

Einfache Konstruktionsverhältnisse zur Herstellung der Vorrichtung ergeben sich weiter dadurch, dass die Kammern durch in den Innenmantel eingesteckte Rohre gebildet werden.

Mit auf der Außenfläche des Innenmantels des Kondensators radial abstehenden Wärmeleitrippen wird weiters der Wirkungsgrad des Kondensators vergrößert, weil eben dem Kältemittel eine größere Oberfläche am Innenrohr zur Verfügung steht.

In der Zeichnung ist der Erfindungsgegenstand beispielsweise dargestellt. Es zeigen
Fig. 1 eine teilweise aufgerissenen Ansicht der in das Erdreich eingesetzten Vorrichtung
Fig. 2 einen Schnitt der Vorrichtung nach der Linie II-II in einer Draufsicht, Fig. 3 einen schematischen Schnitt durch eine bevorzugte Ausführungsform der Erfindung und Fig. 4 einen Schnitt gemäß A-A in Fig. 3.

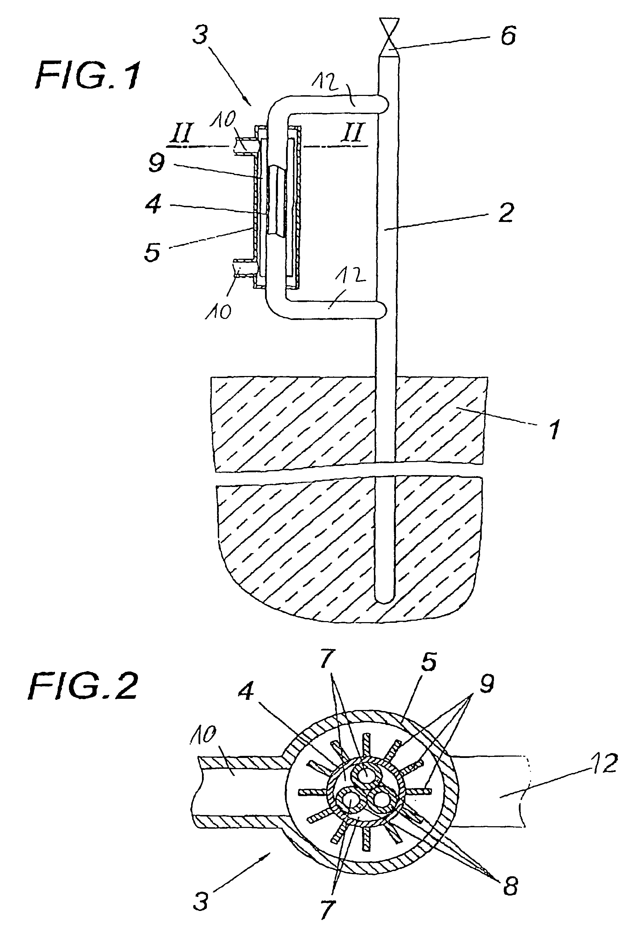

Das in Fig. 1 und 2 dargestellte Ausführungsbeispiel der Vorrichtung zum Erwärmen eines im Kreislauf einer Wärmepumpe gefüllten Kältemittels weist ein in das Erdreich 1 eingesetztes Sondenrohr 2 auf. Das Sondenrohr 2 ist an seinem oberen Ende mit einem Kondensator 3 verbunden, der aus einem rohrförmigen Innenmantel 4 und einem rohrförmigen Außenmantel 5 besteht, wobei im Ringraum zwischen dem Innen- und Außenmantel 4 bzw. 5 das zu erwärmende Kältemittel der Wärmepumpe geführt wird. Der in das Erdreich 1 eingesetzte Teil des Sondenrohrs 2 bildet einen Verdampfer für einen Wärmeträger, der über ein Ventil 6 am oberen Ende des Sondenrohrs 2 einfüllbar ist. Der vom Verdampfer des Sondenrohrs aufsteigende Wärmeträger gelangt im oberen Endbereich des Sondenrohrs 2 in den Kondensator 3, wobei der Kondensator 3 seitlich am Sondenrohr 2 anschließt.

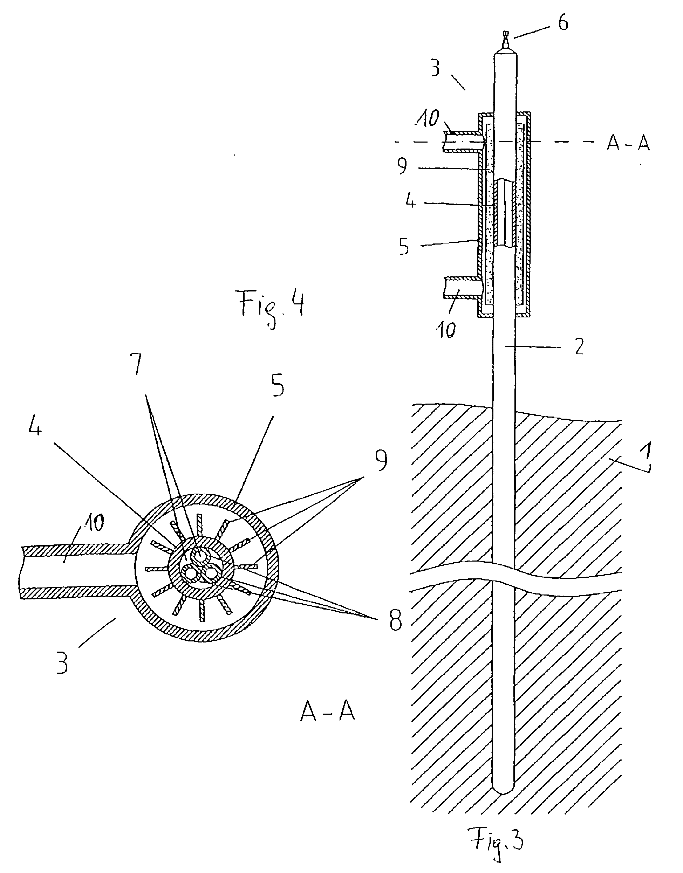

Es ist aber auch denkbar, den Kondensator 3 in Verlängerung des Sondenrohrs 2 vorzusehen, so wie dies in Fig. 3 und 4 dargestellt ist.

Der Innenmantel 4 des Kondensators 3 weist aufgrund des Kältemittels eine zum Wärmeträger vergleichsweise große Temperaturdifferenz auf, sodass dort im Wesentlichen der Wärmeträger kondensiert und seine Wärme an das Kältemittel abgibt. Zur Erhöhung der Kondensationsrate des Wärmeträgers ist der Innenmantel 4 durch Kammern 8 unterteilt, welche Kammern 8 parallele Strömungswege 7 für den Wärmeträger ausbilden. Damit kann auf vorteilhafte Weise der Strömungswiderstand des Wärmeträgers vergleichsweise gering gehalten werden, wobei der Strömungswiderstand auch durch eine gerade Achse bzw. Verlauf des Innenmantels 4 des Kondensators 3 gegenüber bekannten Kondensatoren vermindert wird.

Die Kammern 8 des Innenmantels 4 werden durch in den Innenmantel 4 eingesteckte Rohre 8 gebildet, was den Bauaufwand des Kondensator 3 verringert.

Am Innenmantel 4 des Kondensators 3 sind an seiner Außenfläche radial abstehende Wärmeleitrippen 9 vorgesehen, wodurch der Wärmeübergang auf das Kältemittel verbessert ist.

Der Innenmantel 4 und der Außenmantel 5 der Vorrichtung werden von Rohren, insbesondere Kupferrohren, gebildet. Die die Kammern 8 des Innenmantels 4 ausbildenden Rohre sind vorteilhafterweise ebenfalls von Kupferrohren gebildet. Diese Rohre stehen mit dem Innenrohr thermisch in Verbindung. Die Rohre liegen an der Innenwand des Innenmantels 4 und aneinander an. Je besser der Wärmeübergang ist, umso besser ist dies für die Funktion bzw. den Wirkungsgrad der Vorrichtung.

Die Kammern 8 bzw. die von den Innenwand- und Außenwandflächen der Rohre gebildeten Kammern erstrecken sich in Längsrichtung des Innenmantels bzw. des diesen bildenden Rohres.

Die in den Innenmantel 4 eingefügten Rohre werden unter Ausbildung zumindest eines Passsitzes, vorzugsweise eines Presssitzes eingefügt. Es werden in den Innenmantel 4 zumindest 3 Rohre eingesetzt.

Durch die nebeneinander liegenden Kammern 8 steigt das im unteren Bereich bzw. im Bodenbereich der Sonde verdampfende CO₂ in den oberen Bereich des Sondenrohres 2 und wird in dem Bereich, in dem sich die eingesetzten Rohre bzw. Kammern 8 befinden, durch das diesen Bereich des Sondenrohres 2 umspülende Kältemittel abgekühlt, bis es kondensiert. Das Kondensat tropft in den unteren Bereich des Sondenrohres 2 ab, in welchem es wieder durch die von außen erfolgende Wärmezufuhr verdampft.

Entsprechend Fig. 3 wird über Anschlüsse 10 das Kältemittel durch das den Außenmantel 5 bildende Rohr geführt. Dieses Rohr umgibt das gerade Sondenrohr 2, auf dem bzw. mit dem die Wärmeleitrippen 9 verbunden bzw. angeordnet sind. Der im Bereich des Außenmantels befindliche Rohrbereich des Sondenrohres 2 bildet den Innenmantel 4 des Kondensators und wird vom Kältemittel gekühlt. Im Inneren des Sondenrohres 2 bzw. dessen Innenmantel 4 befinden sich die Strömungswege 7 definierenden Kammern bzw. Rohre 8. Der Aufbau des Kondensators gemäß Fig. 1 und Fig. 3 ist vergleichbar. Gemäß Fig. 1 wird der Innenmantel 4 von einer Abzweigung 12 bzw. eine Anschlussrohr 12 gebildet, die bzw. das mit den beiden Endbereichen wärmeträgerleitend mit dem Sondenrohr 2 verbunden ist. Gemäß Fig. 3 wird der Innenmantel 4 vom Sondenrohr 2 selbst gebildet.

## Patentansprüche

1. Vorrichtung zum Erwärmen eines im Kreislauf einer Wärmepumpe geführten Kältemittels mit einem in ein Erdreich (1) einsetzbaren und einen Verdampfer für einen Wärmeträger bildenden Sondenrohr (2) und mit einem an das obere Ende des Sondenrohr (12) angeschlossenen Kondensator (3), aus einem Innenmantel (4) und einem Außenmantel (5), wobei der Wärmeträger des Sondenrohrs den Innenmantel und das Kältemittel den Ringraum zwischen dem Innen- und dem Außenmantel durchströmt, **dadurch gekennzeichnet, dass** der vorzugsweise eine gerade Achse aufweisende Innenmantel (4) des Kondensators (3) zumindest abschnittsweise durch Kammern (8) unterteilt ist, die parallele Strömungswege (7) für den Wärmeträger bilden.

2. Vorrichtung nach Anspruch 1, **dadurch gekennzeichnet, dass** die Kammern (8) durch in den Innenmantel (4) eingesteckte Rohre (8) gebildet sind.

3. Vorrichtung nach Anspruch 1 oder 2, **dadurch gekennzeichnet, dass** der Innenmantel (4) des Kondensators (3) an seiner Außenfläche radial abstehende Wärmeleitrippen (9) aufweist.

4. Vorrichtung nach einem der Ansprüche 1 bis 3, **dadurch gekennzeichnet, dass** der Innenmantel (4) von einer Abzweigung bzw. einem Anschlussrohr (12) gebildet ist, die bzw. das an das Sondenrohr (2) in dessen oberen Bereich, insbesondere Endbereich, angeschlossen ist.

5. Vorrichtung nach einem der Ansprüche 1 bis 3, **dadurch gekennzeichnet, dass** der obere Bereich, insbesondere Endbereich, des Sondenrohres (2) den Innenmantel (4) des Kondensators (3) bildet und vom Außenmantel (5) umgeben ist.

## Claims

1. Device for heating a coolant, which is conducted in the circuit of a heat pump, having a probe tube (2) that can be inserted into a ground (1) and forms an evaporator for a heat transfer medium and having a condenser (3) connected to the upper end of the probe tube (2) and consisting of an inner sleeve (4) and an outer sleeve (5), with the heat transfer medium of the probe tube flowing through the inner sleeve and the coolant flowing through the annular space between the inner and the outer sleeve, **characterised in that** the inner sleeve (4) of the condenser (3) that mostly has a straight axis is subdivided at least in sections by chambers (8) that form parallel flow paths (7) for the heat transfer medium.

2. Device according to claim 1, **characterised in that** the chambers (8) are formed by tubes (8) that are plugged into the inner sleeve (4).

3. Device according to claim 1 or 2, **characterised in that** the inner sleeve (4) of the condenser (3) has on its outer surface radially projecting heat-conducting ribs (9).

4. Device according to one of claims 1 to 3, **characterised in that** the inner sleeve (4) is formed by a branching or a connection tube (12) that is connected to the probe tube (2) in the latter's upper region, in particular the end region.

5. Device according to one of claims 1 to 3, **characterised in that** the upper region, in particular the end region, of the probe tube (2) forms the inner sleeve (4) of the condenser (3) and is surrounded by the outer sleeve (5).

## Revendications

1. Dispositif pour réchauffer un fluide réfrigérant circulant dans une pompe à chaleur, avec une sonde (2) apte à être enfoncée dans un sol (1) et formant un évaporateur pour un fluide caloporteur et avec un condenseur (3) raccordé à la région supérieure de la sonde (2), lequel condenseur se compose d'une gaine intérieure (4) et d'une gaine extérieure (5), le fluide caloporteur de la sonde traversant la gaine intérieure et le fluide réfrigérant traversant l'espace annulaire compris entre la gaine intérieure et la gaine extérieure, **caractérisé en ce que** la gaine intérieure (4), de préférence rectiligne, du condenseur (3) est divisée au moins partiellement par des chambres (8) formant des voies d'écoulement parallèles (7) pour le fluide caloporteur.

2. Dispositif selon la revendication 1, **caractérisé en ce que** les chambres (8) sont formées par des tubes (8) insérés dans la gaine intérieure (4).

3. Dispositif selon la revendication 1 ou la revendication 2, **caractérisé en ce que** la gaine intérieure (4) du condenseur (3) présente, sur sa face extérieure, des nervures thermoconductrices en saillie radiale.

4. Dispositif selon l'une quelconque des revendications 1 à 3, **caractérisé en ce que** la gaine intérieure (4) est formée d'une dérivation ou d'un tube de jonction (12), raccordé à la région supérieure, notamment l'extrémité supérieure, de la sonde (2).

5. Dispositif selon l'une quelconque des revendications 1 à 3, **caractérisé en ce que** la région supérieure, notamment l'extrémité supérieure de la sonde (2) forme la gaine intérieure (4) du condenseur (3) et est entourée de la gaine extérieure (5).
